# FASCICULE DE BREVET EUROPEEN

(11) **EP 3 119 619 B1**
(45) Date de publication et mention de la délivrance du brevet: **04.05.2022**
(21) Numéro de dépôt: 15718576.0
(22) Date de dépôt: 18.03.2015
(51) Int. Cl.: B60C 23/04, G06K 19/077, B29D 30/00

(54) **PATCH DE SUPPORT POUR PNEUMATIQUE**
MONTAGEFLICKEN FÜR EINEN REIFEN
MOUNTING PATCH FOR A TYRE

(30) Priorité: 21.03.2014 FR 1400686
(43) Date de publication de la demande: 25.01.2017
(73) Titulaire: Compagnie Générale des Etablissements Michelin, 63000 Clermont-Ferrand (FR)
(72) Inventeur: MARQUES, Frédéric, F-63040 Clermont-ferrand Cedex 9 (FR); LHOSPITALIER, Denis, F-63040 Clermont-ferrand Cedex 9 (FR)
(74) Mandataire: Roussy, Delphine
(86) Numéro de dépôt international: PCT/IB2015/000362
(87) Numéro de publication internationale: WO 2015/140623

(56) Documents cités:
- EP-A2- 0 925 959
- WO-A1-2014/041060
- DE-A1-102007 060 861
- FR-A1- 2 950 691
- FR-A1- 2 967 613
- JP-A- 2006 240 598

## Description

### DOMAINE TECHNIQUE DE L'INVENTION

La présente invention concerne un patch caoutchouteux de support d'un organe électronique actif pour pneumatique. Le patch comporte une embase avec une face de liaison sensiblement plane destinée à être fixée à la surface interne d'un pneumatique. Il comporte aussi une face d'appui apte à servir d'appui audit organe électronique actif. L'invention concerne également un pneumatique comportant, fixé à sa surface interne, un patch de support tel que préalablement décrit.

### ETAT DE LA TECHNIQUE ANTERIEURE

La demande de brevet WO2012/069515 propose un dispositif de fixation d'un module sur la paroi interne d'un pneumatique, constitué d'une embase solidaire du pneumatique, et d'une bande souple. L'embase comporte des moyens de fixation de la bande et les extrémités de la bande souple comportent au moins deux moyens indépendants d'accrochage du module. La bande souple est disposée de manière amovible dans l'embase par deux ouvertures dans l'embase permettant le passage de la bande. La bande souple comporte trois portions : une portion médiane, en tissus biélastique et deux portions d'extrémité chacune reliée à la partie médiane et réalisées en tissus pourvus de crochets et de boucles. Elle peut également être mono composant sous la forme d'une bande en tissu pourvue de crochets et de boucles (bande *Velcro).*

Le document WO2011/039486 décrit un organe de mesure de pression comprenant une surface de mesure de pression liée fonctionnellement à un corps d'épreuve et un boîtier étanche de mesure de pression dans lequel est agencé le corps d'épreuve. La surface de mesure de pression est portée par une paroi déformable du boîtier étanche de mesure de pression s'étendant à distance du corps d'épreuve. Le boîtier étanche de mesure de pression délimite un espace interne au boîtier étanche. Des moyens de transmission de la pression entre la surface de mesure de pression et le corps d'épreuve comprenant un matériau sensiblement incompressible occupent la totalité de l'espace interne.

Dans les technologies préalablement décrites, les capteurs sont amovibles et susceptibles d'être retirés à tout moment de leur fixation à un premier pneumatique pour une fixation ultérieure à un pneumatique, sans aucune assurance qu'il s'agisse du même pneumatique. Ainsi, si les données reçues des capteurs sont analysées à des fins de suivi de l'évolution du pneumatique dans le temps, il existe un risque que le suivi concerne plus d'un seul pneumatique, sans qu'aucun moyen ne permettre de le contrôler ou d'en être informé.

On connaît également un système de surveillance de la pression des pneumatiques comportant un élément d'identification intégré dans la bande de roulement du pneumatique à surveiller, un support, posé contre la paroi interne du pneumatique, en alignement avec l'élément d'identification, et sur lequel est fixé un capteur de pression. Le capteur de pression reçoit des données d'identification de l'élément intégré au pneumatique. Ce même capteur transmet hors du pneumatique des données concernant la pression du pneumatique identifié. Ce type de système implique d'une part, de modifier l'architecture du pneumatique afin de permettre l'intégration de l'élément d'identification, et d'autre part de modifier le procédé de fabrication de ce pneumatique, afin de prévoir des étapes d'intégration de l'élément d'identification. Outre les coûts importants suscités par ces modifications, le fait d'introduire dans un processus industriel lourd et complexe des étapes d'intégration d'un petit composant particulièrement fragile, présente de nombreuses difficultés à surmonter, tant en termes d'assurance de qualité que de génie industriel afin de s'assurer que le processus ne devient pas trop complexe et coûteux.

Le document WO2014/041060 décrit un système permettant de stocker les données de pneumatiques de voitures dans un capteur prévu à cet effet. Un système de transmission de données par RFID est prévu entre une étiquette du pneumatique et le capteur. Le système prévoit une détection de la mise en place du capteur actif sur son socle au moyen de contacts électriques. Les contacts électriques en question ne sont pas intégrés dans le socle. Au contraire, ils sont proéminents du socle dans le but de permettre le contact électrique. Lorsque le contact est établi, le capteur lance une lecture des données d'identifiant de l'étiquette. Cette lecture par mise en contact permet de s'assurer qu'en cas de dépose du capteur, une nouvelle lecture est effectuée lors d'une installation ultérieure. Tout changement de couple (ID-capteur) est alors détectée. Ce système est spécifiquement conçu pour des véhicules de tourisme : les contacts électriques du capteur et du socle sont des éléments fragiles et inadaptés à un environnement rigoureux tel que celui des pneumatiques d'engins de génie civil. Le document DE102007060861 décrit un procédé permettant d'assurer la mise à jour des données de pneumatique pour des systèmes de sécurité de pneumatiques, comprenant des phases de mesure de la pression du pneumatique à des intervalles réguliers et des moyens permettant de détecter une chute soudaine de la pression du pneumatique.

Pour pallier ces différents inconvénients, l'invention prévoit différents moyens techniques.

### EXPOSE DE L'INVENTION

Tout d'abord, un premier objet de l'invention consiste à prévoir un patch caoutchouteux ou caoutchoutique de support d'un capteur ou module électronique permettant une utilisation à long terme dans laquelle le lien entre le capteur et le pneumatique peut être contrôlé et assuré.

Un autre objet de l'invention consiste à prévoir un système de surveillance de pneumatiques sans risque d'erreur concernant l'identification du pneumatique.

Encore un autre objet de l'invention consiste à prévoir un système de surveillance de pneumatiques permettant de s'assurer que l'historique de données de pression et/ou de température obtenu pour un pneumatique donné est associé à ce pneumatique de manière rigoureuse, indépendamment de toute intervention humaine.

Encore un autre objet de l'invention consiste à prévoir un système de surveillance de pneumatiques particulièrement adapté à des pneumatiques de très grandes dimensions tels que des pneumatiques destinés aux engins de génie civil et/ou à certains types d'engins agricoles.

Pour ce faire, l'invention prévoit un patch caoutchouteux de support d'un organe électronique actif selon la revendication 1.

Cette architecture permet de protéger de façon optimale l'étiquette passive contre toutes les agressions dues à l'utilisation dans l'environnement particulièrement rigoureux des pneumatiques d'engins de génie civil. En particulier, cette architecture permet de protéger l'étiquette des liquides qui peuvent être introduits à l'intérieur des pneumatiques pour protéger notamment la jante de la rouille, tel Tire Life^{®} de la société Fuller Brothers, Inc. L'étiquette entièrement intégrée est bien protégée de tout contact ou toute agression par ce produit.

On note de nombreux avantages inhérents à l'intégration d'une étiquette passive d'identification dans le patch de support du module électronique actif. En outre, la distance de lecture entre le module électronique actif et l'ensemble patch-étiquette passive d'identification est très courte, bien maîtrisée, et correspond très bien à ce mode d'échange de données. Ce concept permet une implantation de l'étiquette passive d'identification en assurant une parfaite maîtrise des contraintes industrielles car cette implantation dans le patch est effectuée hors du procédé de fabrication des pneumatiques de grande dimension, inadapté à une intégration d'un composant petit et fragile directement dans l'architecture du pneumatique.

Ainsi, l'étiquette est implantée au niveau du processus de fabrication des patchs. Ce dernier est beaucoup plus adapté et présente des risques réduits pour l'implantation de composants fragiles de petite dimension. Le seul ajustement requis au niveau du procédé de fabrication des pneumatiques concerne l'étape de collage des patchs contre la paroi interne du pneumatique et l'entrée des données d'identifiant unique. Ces opérations étant effectuées après la finition du pneumatique, elles sont sans grand impact sur le processus de fabrication. Enfin, l'implantation de l'étiquette dans le patch de support du module électronique plutôt que directement dans le pneumatique permet de localiser l'étiquette sans contrainte de position dans le pneumatique.

Selon un mode de réalisation avantageux, l'embase comporte au moins une bretelle procurant deux ouvertures en regard l'une de l'autre permettant le passage d'une bande de fixation dudit organe électronique actif et dans lequel ledit organe d'identification est sensiblement aligné avec l'emplacement prévu de la bande de fixation.

Selon un autre mode de réalisation avantageux ladite face d'appui comporte une plate-forme de géométrie adaptée pour coopérer avec une géométrie correspondante dudit organe électronique actif afin de fixer ledit organe électronique actif.

Ladite plateforme est avantageusement en forme de queue d'aronde.

Selon encore un autre mode de réalisation avantageux, ladite étiquette passive d'identification comprend un transpondeur à identification par radiofréquence de type RFID (par exemple UHF tel que 800-900 MHz, HF tel que 13.56 MHz, ou basse fréquence (LF) tel que 125 kHz).

L'invention prévoit également un pneumatique selon la revendication 6.

De manière avantageuse, ladite étiquette d'identification comprend un transpondeur à identification par radiofréquence passif de type RFID muni d'antennes (par exemple UHF tel que 800-900 MHz, HF tel que 13.56 MHz, ou basse fréquence (LF) tel que 125 kHz).

Les transpondeurs RFID ont souvent des distances de lecture relativement courtes. Pour des pneumatiques d'engins de génie civil, pouvant atteindre un diamètre de 4 m, la distance peut souvent s'avérer insuffisante pour assurer une lecture si le transpondeur se trouve par exemple en position haute, loin du lecteur. Selon l'invention, l'utilisation d'un module électronique actif disposant lui-même de moyens de transfert de données à plus longue distance, permet de pallier cette limitation.

De manière avantageuse, le pneumatique est conçu pour montage sur des véhicules de génie civil, en particulier des véhicules de transport miniers, ou des véhicules agricoles.

Il est également prévu un procédé de fabrication d'un pneumatique tel qu'il comporte une étape de mise en place sur sa surface interne d'un patch caoutchouteux de support d'un module électronique actif. Le patch comporte une face sensiblement plane de liaison et une face d'appui apte à servir d'appui audit module électronique actif et une étiquette passive d'identification de pneumatique disposée entre lesdites deux faces. L'étape de mise en place est effectuée par mise en contact de la surface de liaison contre la surface interne du pneumatique. Le procédé prévoit par ailleurs une étape d'inscription dans une mémoire de ladite étiquette d'identification d'une donnée d'identifiant unique du pneumatique sur lequel le patch est fixé.

Le procédé permet de garantir un bon alignement du module électronique actif de mesure et transfert de paramètres physiques de pneumatiques avec l'étiquette d'identification du pneumatique (insérée dans le patch), assurant de ce fait le bon fonctionnement du système. A contrario, le procédé connu dans lequel un organe d'identification est inséré directement dans le pneumatique ne permet pas de garantir un tel alignement, ou nécessiterait la mise en place d'étapes d'alignement très contraignantes pour des fabrications industrielles de pneumatiques de grande dimension tels que ceux considérés.

Le procédé est simple à mettre en œuvre et ne requiert pas de modification substantielle du processus industriel préalablement établi pour la fabrication des pneumatiques. Les opérations délicates d'intégration de l'étiquette passive d'identification sont mises en œuvre dans un environnement industriel bien adapté à la manipulation de composants fragiles de petites dimensions, en comparaison avec l'environnement industriel de fabrication des pneumatiques de très grande dimension tels que ceux destinés aux engins de génie civil.

De manière avantageuse, ladite étape de mise en place dudit patch caoutchouteux à la surface dudit pneumatique a lieu avant la vulcanisation dudit pneumatiq ue.

Dans une variante de réalisation, ladite étape de mise en place dudit patch caoutchouteux à la surface dudit pneumatique a lieu après la vulcanisation dudit pneumatique.

Il est également prévu un module électronique actif de mesure et transfert de paramètres physiques de pneumatique, comportant :
i) au moins un capteur (par exemple de pression, de température, un comptetour de préférence de type bobine, etc.) ;
ii) une alimentation (par exemple une pile et une capacité de stockage temporaire (en anglais « booster ») afin de pouvoir alimenter le lecteur RFID pendant une durée sensiblement courte avec une puissance suffisante pour assurer son bon fonctionnement) ;
iii) un module de transmission de données (par exemple un transmetteur radio type 433 MHz) permettant de transmettre les données physiques reçues des capteurs à un récepteur distant (par exemple à un récepteur situé sur le véhicule ou à un lecteur mobile ou encore à un lecteur fixe situé par exemple sur une borne le long d'un trajet fréquemment utilisé par le véhicule concerné comme dans une zone d'exploitation telle qu'une mine) ;
dans lequel l'unité de mesure et transfert comporte également un lecteur d'identifiant de pneumatique (RFID 125kHz, 13.56MHz ou 800MHz) susceptible de recevoir les données d'identification en provenance d'un patch pour pneumatique tel que préalablement décrit.

Ce module électronique de mesure et transfert de données de paramètres physiques de pneumatiques permet avantageusement :
- de lire l'identifiant du pneumatique :
   soit régulièrement ;
   soit sur demande via un module d'interrogation ;
   soit en relation avec un test de seuil de basse pression ou pression sensiblement nulle indiquant que le pneumatique et le capteur ont potentiellement été désassociés ;
- de stocker cet identifiant dans une mémoire locale ou distante ;
- de transmettre cet identifiant via une fréquence d'émission à sensiblement longue portée à un récepteur sur véhicule, à un lecteur mobile ou à une borne de lecture ;
- d'associer les paramètres physiques de pneumatique mesurés au bon pneumatique de façon certaine, comme par exemple en associant ces paramètres (km, pression, température, etc.) à l'identifiant pneumatique du patch lié au pneumatique où les mesures ont été effectuées ;
- de savoir combien de km ont été parcourus dans chaque gamme de pression et/ou de température ;
- de vérifier l'adéquation du type de pneumatique avec le type de véhicule.

L'invention prévoit enfin un système de surveillance de pneumatique de véhicule (ou d'une flotte de véhicules) selon la revendication 9.

Le système selon l'invention permet de détecter les cas les plus vraisemblables où les pneumatiques sont susceptibles d'être démontés, et prévoit d'effectuer une lecture des données d'identification après remontage et regonflage du pneumatique. Ces cas étant peu fréquents, les lectures sont effectuées uniquement lorsque cela est nécessaire, permettant ainsi d'économiser les réserves d'énergie de la pile.

Selon l'invention, l'étiquette passive est intégrée dans ledit patch entre la face de liaison et la face d'appui.

Selon l'invention, lorsque le patch et le module électronique sont montés en position de fonctionnement, ils sont sans contact électrique entre eux.

Le « relais » mis en œuvre par le module de transmission de données permet d'élargir le champ de distribution des données physiques en relation avec l'utilisation et le comportement des pneumatiques. Par exemple, une centralisation des données permet de localiser les pneumatiques utilisés sur différents sites.

Compte tenu du haut niveau de surveillance requis pour optimiser l'utilisation d'une flotte de pneumatiques de génie civil, l'obtention d'une assurance que les données correspondent bien au pneumatique identifié constitue un avantage technique considérable.

Selon un mode de réalisation avantageux, les données de paramètres physiques de pneumatiques sont stockées dans une mémoire du module électronique actif de mesure et transfert de paramètres physiques de pneumatique.

Dans une variante, les données de paramètres physiques de pneumatiques sont stockées dans une mémoire d'un serveur de données situé à distance.

Egalement de manière avantageuse, le système comporte par ailleurs un module de commande à distance (en anglais « trigger ») (basse fréquence du type 125kHz) permettant d'envoyer des commandes au module électronique actif depuis une unité mobile ou depuis des modules d'interrogation installés sur le véhicule.

### DESCRIPTION DES FIGURES

Tous les détails de réalisation sont donnés dans la description qui suit, complétée par les figures 1 à 7, présentées uniquement à des fins d'exemples non limitatifs, et dans lesquelles:
- la figure 1 est une vue en perspective d'un exemple de patch selon l'invention dans lequel un module électronique actif est placé;
- la figure 2 est une vue en élévation d'un exemple de patch selon l'invention dans lequel un module électronique actif est placé;
- la figure 3 est une vue de dessus du patch de la figure 1 ;
- la figure 4 est une vue en perspective du patch de la figure 1 montrant une étiquette intégrée ;
- la figure 5 est une vue en perspective d'un autre exemple de patch selon l'invention dans lequel une variante du module électronique actif est placée;
- la figure 6 est une vue en élévation du patch de la figure 5 montrant l'intégration d'une étiquette dans la plate-forme du patch ;
- la figure 7 est une représentation schématique d'un exemple de réalisation d'un système de surveillance de pneumatique selon l'invention.

### DESCRIPTION DETAILLEE DE L'INVENTION

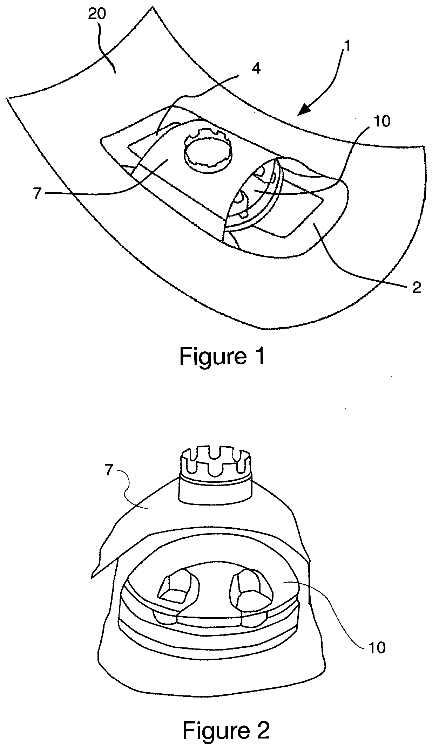

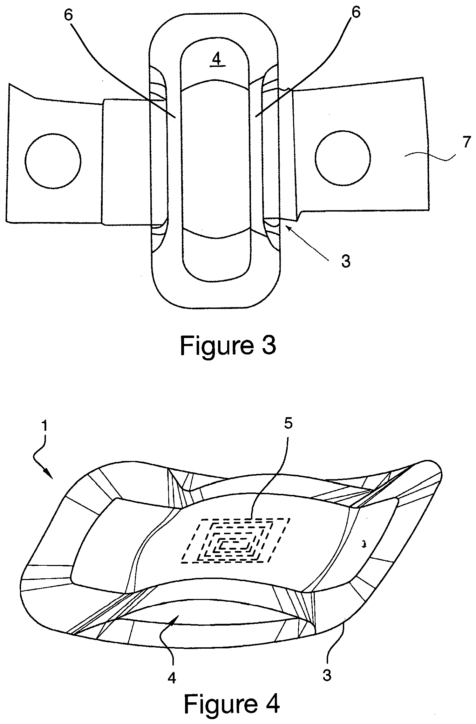

La figure 1 est une représentation schématique d'un exemple de réalisation d'un patch 1 de support selon l'invention, collé de façon permanente contre une paroi interne 20 d'un pneumatique. La figure montre une portion de la paroi 20 ou surface interne d'un pneumatique à des fins de simplification de la figure. Une face de liaison 3 (voir figures 3 et 4), prévue sous le patch 1 sert d'interface d'adhésion entre le patch et la surface interne du pneumatique prévue pour porter le patch. La face de liaison est avantageusement sensiblement plane et lisse, de façon à favoriser le contact adhésif entre les deux éléments à assembler.

Le côté opposé à la face de liaison consiste en une face d'appui 4 contre laquelle un module électronique actif 10 est susceptible d'être posé. Pour assurer le maintien du module électronique actif 10 sur la face d'appui 4, une bande de fixation 7 souple coopère avec le patch, tel que montré à la figure 3. Dans l'exemple illustré, la bande de fixation 7 est maintenue au moyen de deux bretelles 6 sensiblement parallèles ménageant chacune une ouverture dans laquelle la bande de fixation 7 s'insère. En variante, les bretelles 6 peuvent être jointes entre elles par une portion centrale commune.

La figure 2 montre le montage d'un module électronique actif 10 sur un patch 1, avec un maintien d'un côté contre la face d'appui 4 du patch, et de l'autre côté au moyen de la bande de fixation 7 qui enveloppe de part et d'autre ledit module électronique 10. Dans l'exemple illustré, la bande de fixation est maintenue fermée par insertion d'une portion proéminente du module dans des ouvertures spécifiquement prévues à cet effet de chaque côté de la bande de fixation 7, tel que bien visible aux figures 1 et 2.

Dans un mode de réalisation avantageux, les extrémités de la bande souple comportent au moins deux moyens indépendants d'accrochage du module. La bande souple est disposée de manière amovible dans l'embase en passant sous deux ouvertures de l'embase permettant le passage de la bande. Cette bande souple est avantageusement mono composant sous la forme d'une bande en tissu pourvue de crochets et de boucles (bande *Velcro).* En variante, la bande souple comporte trois portions : une portion médiane, en tissus biélastique et deux portions d'extrémité chacune reliée à la partie médiane et réalisées en tissus pourvus de crochets et de boucles.

Sans sortir du cadre de l'invention, le patch 1, la bande de fixation 7 et le module électronique 10 peuvent avoir des formes et agencements respectifs différents de ceux illustrés aux figures.

La figure 4 montre une étiquette passive d'identification 5 prévue dans cet exemple sous la face d'appui 4, entre les bretelles 6 du patch. L'étiquette 5 comporte avantageusement une mémoire servant à stocker un identifiant unique du pneumatique contre lequel le patch est fixé. Tel que décrit plus loin, l'identifiant est avantageusement attribué au moment où le patch est fixé au pneumatique associé. La fixation entre les deux éléments est de préférence prévue pour être définitive afin d'assurer que l'identifiant du pneumatique reste associé au même pneumatique pour toute la durée de vie de ce dernier.

L'étiquette passive d'identification comprend de préférence un transpondeur à identification par radiofréquence (de type connu). Ce type d'identifiant sans alimentation intégré offre une grande durabilité pour un faible coût, assurant la pérennité de l'identification du produit associé. Il procure également une bonne tenue et durabilité malgré l'environnement très contraignant dans lequel évoluent les pneumatiques d'engins de génie civil ou agricoles.

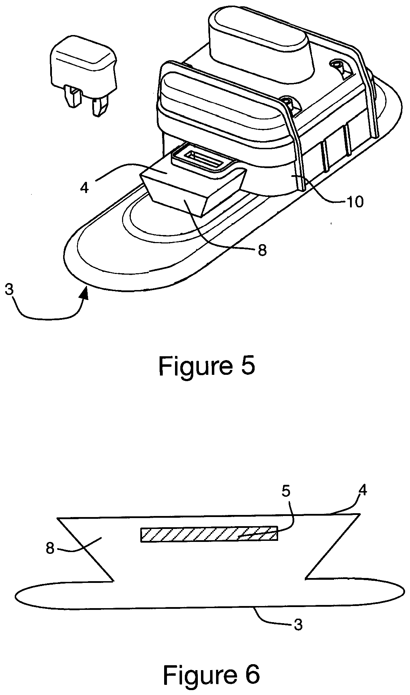

Les figures 5 et 6 montrent une variante de réalisation dans laquelle la fixation du module électronique 10 est assurée par une plate-forme 8 avec profil en queue d'aronde prévue pour insertion dans une des faces du module électronique dans laquelle un profil correspondant en forme de queue d'aronde est prévu. La fixation des deux éléments complémentaires est effectuée par coulissement axial du module électronique 10 sur la plate-forme 8, tel que montré par exemple à la figure 5. Dans cette variante de réalisation, l'étiquette passive d'identification 5 est prévue sur la face supérieure de la plate-forme 8. En variante, l'étiquette est intégrée à l'intérieur de la plate-forme. Ces figures montrent aussi un exemple de module électronique avec un profil ou configuration différent de l'exemple des figures 1 à 4.

Le module électronique actif 10, indépendamment de sa configuration externe, comporte un lecteur d'identifiant de pneumatique spécifiquement adapté pour recevoir les données d'identification en provenance d'une étiquette passive d'identification 5 intégrée à un patch 1.

Du fait que la lecture RFID d'une étiquette électronique passive du pneumatique occasionne une forte consommation d'énergie au niveau du lecteur, il est avantageux de réduire le nombre de lectures de l'étiquette afin de prolonger la durée de vie de la pile du module électronique actif. Par exemple, un nombre situé entre 5 et 15, et de préférence autour de 10 lectures, permet d'assurer les fonctions du système tout en assurant une durée de vie suffisante de la pile du lecteur.

En outre, selon l'invention, en considérant que la dépose d'un module électronique actif 10 d'un patch 1 de support requiert une manipulation externe, et donc le démontage du pneumatique, une des solutions pour maintenir le nombre de lectures le plus faible possible consiste à effectuer une lecture de l'étiquette lorsque le capteur de pression du module électronique actif détecte une pression sensiblement égale à 0 bar, signifiant que le pneumatique et le capteur ont potentiellement été désassociés l'un de l'autre suite à un démontage du pneumatique. La lecture des données de l'étiquette est alors effectuée après remontage du pneumatique, lorsque le détecteur de pression mesure une valeur de pression sensiblement correspondante à la pression de fonctionnement, signifiant que le pneumatique est bien installé, et prêt pour utilisation.

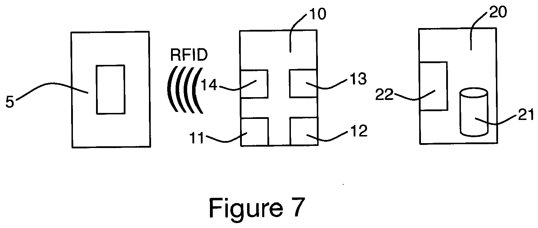

La figure 7 est une représentation schématique d'un exemple de réalisation d'un système de surveillance de pneumatique pour véhicule de génie civil tel que des véhicules de transport pour mines. Le système comporte un module électronique actif 10 pour effectuer les mesures des paramètres physiques des pneumatiques et envoyer les données recueillies à un module de surveillance 20.

Le module électronique actif 10 comporte un capteur de pression 11, une alimentation 12 et un module de transmission 13 de données pour assurer la transmission des données au module de surveillance 20. Il comporte par ailleurs un module 14 de lecture RFID, conçu pour activer l'étiquette passive 5 d'identification du pneumatique. Cette étiquette passive 5 d'identification étant intégrée dans le patch servant de support au module électronique actif 10, le module 14 de lecture RFID est ainsi avantageusement disposé à proximité immédiate de l'étiquette à interroger. L'opération de lecture des données de l'étiquette 5 est ainsi grandement fiabilisée. La consommation électrique requise est optimisée. Les risques d'erreur de lecture sont pratiquement supprimés.

Le module électronique actif comporte avantageusement d'autres capteurs permettant de mesurer d'autres paramètres tels que la température, l'humidité, le nombre de tours effectués, etc.

Le module de surveillance 20 comprend un module 22 de réception de données adapté pour recevoir les données en provenance de un ou plusieurs modules électroniques actifs 10. Une base de données 21 de paramètres de pneumatiques permet de conserver les données utiles pour effectuer une surveillance active, préventive et statistique des pneumatiques.

## Revendications

1. Patch caoutchouteux (1) de support d'un organe électronique actif (10) comportant une embase (2) avec une face de liaison (3) sensiblement plane destinée à être fixée à la surface interne d'un pneumatique et une face d'appui (4) opposée apte à servir d'appui audit organe électronique (10) actif, **caractérisé en ce qu'**il comporte une étiquette passive (5) d'identification du pneumatique correspondant, pourvue d'une mémoire susceptible de mémoriser une donnée d'identifiant unique de ce pneumatique, ladite étiquette passive (5) étant intégrée dans ledit patch (1), entre la face de liaison (3) et la face d'appui (4), de façon à ce que, lorsque le patch caoutchouteux (1) et le module électronique actif (10) sont montés en position de fonctionnement, ils sont sans contact électrique entre eux.

2. Patch caoutchouteux selon la revendication 1, dans lequel l'embase (2) comporte au moins une bretelle (6) procurant deux ouvertures en regard l'une de l'autre permettant le passage d'une bande de fixation (7) dudit organe électronique (10) actif et dans lequel ledit organe d'identification (5) est sensiblement aligné avec l'emplacement prévu de la bande de fixation.

3. Patch caoutchouteux selon la revendication 1, dans lequel ladite face d'appui (4) comporte une plate-forme (8) de géométrie adaptée pour coopérer avec une géométrie correspondante dudit organe électronique (10) actif afin de fixer ledit organe électronique actif.

4. Patch caoutchouteux selon la revendication 3, dans lequel ladite plate-forme (7) est en forme de queue d'aronde.

5. Patch caoutchouteux selon l'une des revendications 1 à 4, dans lequel ladite étiquette passive d'identification (5) comprend un transpondeur à identification par radiofréquence de type RFID.

6. Pneumatique comportant, fixé à sa surface interne (20), un patch (1) de support d'un organe électronique (10) actif, ledit patch (1) comportant une embase (2) avec une face de liaison (3) sensiblement plane fixée à la surface dudit pneumatique et une face d'appui (4) apte à servir d'appui audit organe électronique actif, **caractérisé en ce que** ledit patch caoutchouteux comporte une étiquette passive d'identification (5) du pneumatique comprenant, inscrite dans une mémoire, une donnée d'identifiant unique du pneumatique sur lequel le patch est fixé, ladite étiquette passive (5) étant intégrée dans ledit patch (1), entre la face de liaison (3) et la face d'appui (4), de façon à ce que, lorsque le patch caoutchouteux (1) et le module électronique actif (10) sont montés en position de fonctionnement, ils sont sans contact électrique entre eux.

7. Pneumatique selon la revendication 6, dans lequel ladite étiquette d'identification (5) comprend un transpondeur à identification par radiofréquence passif de type RFID muni d'antennes.

8. Pneumatique selon l'une quelconque des revendications 6 ou 7, tel qu'il est adapté pour équiper des véhicules de génie civil ou des véhicules agricoles.

9. Système de surveillance de pneumatique de véhicule ou d'une flotte de véhicules comportant :
un module électronique (10) actif de mesure et transfert de paramètres physiques de pneumatique, comportant :
i) un capteur de pression (11);
ii) une alimentation (12);
iii) un module de transmission (13) de données permettant de transmettre les données physiques reçues du capteur et de l'étiquette d'identification du patch à un récepteur distant ;
un module de surveillance (20), apte à recevoir du module électronique (10) actif de mesure et transfert de paramètres physiques de pneumatique des données physiques en relation avec l'état ou le comportement du pneumatique ;
un patch caoutchouteux (1) de support d'un module électronique actif (10) comportant une embase (2) avec une face de liaison (3) sensiblement plane destinée à être fixée à la surface interne d'un pneumatique et une face d'appui opposée apte à servir d'appui audit module électronique (10) actif, **caractérisé en ce qu'**il comporte, disposé entre lesdites deux faces (3, 4) une étiquette passive (5) d'identification du pneumatique correspondant, de façon à ce que, lorsque le patch caoutchouteux (1) et le module électronique actif (10) sont montés en position de fonctionnement, ils sont sans contact électrique entre eux,
**en ce que** le module électronique (10) actif comporte également un lecteur (14) d'identifiant de pneumatique susceptible de recevoir les données d'identification en provenance du patch sur lequel il est fixé, et **en ce que** ledit module électronique actif (10) est conçu pour effectuer des lectures RFID de l'étiquette passive (5) du patch après détection d'une baisse de pression du pneumatique jusqu'à sensiblement 0 bar suivie d'une remontée de la valeur de pression jusqu'à une valeur correspondant sensiblement à celle de la pression d'utilisation du pneumatique.

10. Système de surveillance de pneumatique selon la revendication 9, dans lequel les données de paramètres physiques de pneumatiques sont stockées dans une mémoire du module électronique actif de mesure et transfert de paramètres physiques de pneumatique.

11. Systéme de surveillance de pneumatique selon l'une des revendications 9 à 10, dans lequel les données de paramètres physiques de pneumatiques sont stockées dans une mémoire (21) d'un serveur (20) de données situé à distance.

12. Système de surveillance de pneumatique selon l'une des revendications 9 à 11, comportant par ailleurs un module de commande à distance permettant d'envoyer des commandes au module électronique actif depuis une unité mobile ou depuis des modules d'interrogation installés sur le véhicule.

## Patentansprüche

1. Kautschukpatch (1) zum Tragen eines aktiven elektronischen Elements (10), das eine Basis (2) mit einer im Wesentlichen ebenen Verbindungsseite (3), die dazu bestimmt ist, an der Innenfläche eines Luftreifens befestigt zu werden, und einer entgegengesetzten Auflageseite (4) aufweist, die geeignet ist, als Auflage für das aktive elektronische Element (10) zu dienen, **dadurch gekennzeichnet, dass** es ein passives Identifikationsetikett (5) des entsprechenden Luftreifens aufweist, das mit einem Speicher versehen ist, der fähig ist, einen einzigen Kennungsdatenwert dieses Luftreifens zu speichern, wobei das passive Etikett (5) zwischen der Verbindungsseite (3) und der Auflageseite (4) in das Patch (1) eingebaut ist, damit, wenn das Kautschukpatch (1) und das aktive Elektronikmodul (10) in der Betriebsstellung montiert sind, sie ohne elektrischen Kontakt miteinander sind.

2. Kautschukpatch nach Anspruch 1, wobei die Basis (2) mindestens eine Spange (6) aufweist, die zwei einander gegenüberliegende Öffnungen bereitstellt, die den Durchgang eines Befestigungsstreifens (7) des aktiven elektronischen Elements (10) ermöglichen, und wobei das Identifikationselement (5) im Wesentlichen mit der vorgesehenen Einbaustelle des Befestigungsstreifens ausgerichtet ist.

3. Kautschukpatch nach Anspruch 1, wobei die Auflageseite (4) eine Plattform (8) geeigneter Geometrie aufweist, um mit einer entsprechenden Geometrie des aktiven elektronischen Elements (10) zusammenzuwirken, um das aktive elektronische Element zu befestigen.

4. Kautschukpatch nach Anspruch 3, wobei die Plattform (7) eine Schwalbenschwanzform hat.

5. Kautschukpatch nach einem der Ansprüche 1 bis 4, wobei das passive Identifikationsetikett (5) einen Radiofrequenz-Identifikationstransponder des Typs RFID enthält.

6. Luftreifen, der ein Patch (1) zum Tragen eines aktiven elektronischen Elements (10) an seiner Innenfläche (20) befestigt aufweist, wobei das Patch (1) eine Basis (2) mit einer im Wesentlichen ebenen Verbindungsseite (3), die an der Fläche des Luftreifens befestigt ist, und einer Auflageseite (4) aufweist, die geeignet ist, als Auflage für das aktive elektronische Element zu dienen, **dadurch gekennzeichnet, dass** das Kautschukpatch ein passives Identifikationsetikett (5) des Luftreifens aufweist, das in einem Speicher gespeichert einen einzigen Kennungsdatenwert des Luftreifens enthält, an dem das Patch befestigt ist, wobei das passive Etikett (5) zwischen der Verbindungsseite (3) und der Auflageseite (4) in das Patch (1) eingebaut ist, damit, wenn das Kautschukpatch (1) und das aktive Elektronikmodul (10) in der Betriebsstellung montiert sind, sie ohne elektrischen Kontakt miteinander sind.

7. Luftreifen nach Anspruch 6, wobei das Identifikationsetikett (5) einen mit Antennen versehenen Radiofrequenz-Identifikationstransponder des Typs RFID enthält.

8. Luftreifen nach einem der Ansprüche 6 oder 7, derart, dass er für die Ausstattung von Baufahrzeugen oder von landwirtschaftlichen Fahrzeugen geeignet ist.

9. Überwachungssystem eines Luftreifens eines Fahrzeugs oder einer Fahrzeugflotte, das aufweist:
ein aktives Elektronikmodul (10) zur Messung und Übertragung von physikalischen Parametern des Luftreifens, das aufweist:
i) einen Drucksensor (11);
ii) eine Versorgung (12);
iii) ein Datenübertragungsmodul (13), das es ermöglicht, die vom Sensor und vom Identifikationsetikett des Patchs empfangenen physikalischen Daten an einen fernen Empfänger zu übertragen;
ein Überwachungsmodul (20), das geeignet ist, vom aktiven Elektronikmodul (10) zur Messung und Übertragung physikalischer Luftreifenparameter physikalische Daten in Verbindung mit dem Zustand oder dem Verhalten des Luftreifens zu empfangen;
ein Kautschukpatch (1) zum Tragen eines aktiven Elektronikmoduls (10), das eine Basis (2) mit einer im Wesentlichen ebenen Verbindungsseite (3), die dazu bestimmt ist, an der Innenfläche eines Luftreifens befestigt zu werden, und einer entgegengesetzten Auflageseite aufweist, die geeignet ist, als Auflage für das aktive Elektronikmodul (10) zu dienen,
**dadurch gekennzeichnet, dass** es zwischen den zwei Seiten (3, 4) angeordnet ein passives Identifikationsetikett (5) des entsprechenden Luftreifens aufweist, damit, wenn das Kautschukpatch (1) und das aktive Elektronikmodul (10) in der Betriebsstellung montiert sind, sie ohne elektrischen Kontakt miteinander sind,
dass das aktive Elektronikmodul (10) ebenfalls ein Lesegerät (14) einer Luftreifenkennung aufweist, das die von dem Patch, an dem es befestigt ist, kommenden Identifikationsdaten empfangen kann, und dass das aktive Elektronikmodul (10) konzipiert ist, RFID-Lesevorgänge des passiven Etiketts (5) des Patchs nach Erfassung eines Druckabfalls des Luftreifens bis auf im Wesentlichen 0 Bar gefolgt von einem Wiederanstieg des Druckwerts bis auf einen Wert im Wesentlichen entsprechend demjenigen des Betriebsdrucks des Luftreifens auszuführen.

10. Luftreifen-Überwachungssystem nach Anspruch 9, wobei die Daten physikalischer Luftreifenparameter in einem Speicher des aktiven Elektronikmoduls zur Messung und Übertragung physikalischer Luftreifenparameter gespeichert sind.

11. Luftreifen-Überwachungssystem nach einem der Ansprüche 9 bis 10, wobei die Daten physikalischer Luftreifenparameter in einem Speicher (21) eines Datenservers (20) gespeichert sind, der sich in Abstand befindet.

12. Luftreifen-Überwachungssystem nach einem der Ansprüche 9 bis 11, das außerdem ein Fernsteuerungsmodul aufweist, das es ermöglicht, von einer mobilen Einheit oder von auf dem Fahrzeug installierten Abfragemodulen Befehle an das aktive Elektronikmodul zu senden.

## Claims

1. Rubber patch (1) for mounting an active electronic component (10) comprising a base (2) with a substantially planar connecting face (3) and intended to be fixed to an internal surface of a tire and an opposed bearing face (4) serving as a support for the active electronic component (10), **characterized in that** it comprises a passive tag (5) for identifying the corresponding tire, provided with a memory for storing a unique identification data item of this tire, the passive tag (5) being integrated into the patch (1) between the connecting face (3) and the bearing face (4) in a manner such that, when the rubber patch (1) and the active electronic component (10) are mounted in an operating position, there is no contact therebetween.

2. Rubber patch according to claim 1, in which the base (2) comprises at least one strap (6) providing two openings facing each other allowing the passage of a fixing strip (7) of the active electronic component (10) and wherein the identification member (5) is substantially aligned with the intended location of the fastening strip.

3. Rubber patch according to claim 1, wherein the bearing face (4) comprises a platform (8) of a geometry adapted to cooperate with a corresponding geometry of the active electronic component (10) in order to affix the active electronic component.

4. Rubber patch according to claim 3, wherein the platform (7) is dovetail shaped.

5. Rubber patch according to one of Claims 1 to 4, in which the passive identification tag (5) comprises an RFID-type radio frequency identification transponder.

6. Tire comprising, fixed to its internal surface (20), a support patch (1) for an active electronic component (10), the patch (1) comprising a base (2) with a substantially planar connecting face (3) fixed to the surface of the tire and a bearing face (4) capable of serving as a support for the active electronic component, **characterized in that** the rubber patch comprises a passive identification tag (5) for the tire comprising, inscribed in a memory, unique identifier data of the tire on which the patch is affixed, the passive tag (5) being integrated in the patch (1) between the connecting face (3) and the bearing face (4) in a manner such that, when the rubber patch (1) and the active electronic component (10) are mounted in an operating position, there is no contact therebetween.

7. Tire according to Claim 6, in which the identification tag (5) comprises a passive RFID-type radio frequency identification transponder provided with antennas.

8. Tire according to claim 6 or claim 7, such that it is suitable for equipping civil engineering vehicles or agricultural vehicles.

9. Monitoring system for a vehicle tire or for a vehicle fleet comprising:
an active electronic component (10) for measuring and transferring physical tire parameters, comprising:
i) a pressure sensor (11);
ii) a power supply (12);
iii) a data transmission module (13) for transmitting the physical data received from the sensor and from an identification tag of a patch to a remote receiver;
a monitoring module (20), able to receive from the active electronic component (10) for measuring and transferring physical parameters of the tire physical data relating to the state or the behavior of the tire;
a rubber patch (1) for supporting an active electronic component (10) comprising a base (2) with a substantially planar connection face (3) intended to be fixed to the internal surface of a tire and an opposite bearing face serving as a support for the active electronic component (10), **characterized in that** it comprises, disposed between the two faces (3, 4), a passive tag (5) for identifying the corresponding tire, in a manner such that, when the rubber patch (1) and the active electronic component (10) are mounted in an operating position, there is no contact therebetween,
**in that** the active electronic component (10) also includes a tire identifier reader (14) capable of receiving the identification data from the patch on which it is attached, and **in that** the active electronic component (10) is designed to perform RFID readings of the passive tag (5) of the patch after detection of a drop in tire pressure down to substantially 0 bar followed by a rise in the pressure value to a value substantially corresponding to that of the tire's operating pressure.

10. Tire monitoring system according to Claim 9, in which the tire physical parameter data is stored in a memory of the active electronic component for measuring and transferring tire physical parameters.

11. Tire monitoring system according to one of Claims 9 to 10, in which the tire physical parameter data is stored in a memory (21) of a remotely located data server (20).

12. Tire monitoring system according to one of Claims 9 to 11, further comprising a remote-control module for sending commands to the active electronic component from a mobile unit or from interrogation modules installed on the vehicle.
